(19) Europäisches Patentamt
European Patent Office
Office européen des brevets

(11) **EP 4 718 704 A1**

(12) **EUROPEAN PATENT APPLICATION**

(43) Date of publication:
**01.04.2026 Bulletin 2026/14**

(21) Application number: **24203068.2**

(22) Date of filing: **27.09.2024**

(51) International Patent Classification (IPC):
**H02M 7/217** (2006.01)    **H02M 7/219** (2006.01)
**H02M 1/42** (2007.01)    **H02M 1/00** (2006.01)
**H02M 1/44** (2007.01)

(52) Cooperative Patent Classification (CPC):
**H02M 7/217; H02M 1/0058; H02M 1/4225;
H02M 1/4233; H02M 1/44; H02M 7/219**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Tridonic GmbH & Co KG
6851 Dornbirn (AT)**

(72) Inventors:
• **Afzali Arani, Sayed Reza
6851 Dornbirn (AT)**
• **Ramezan Ghanbari, Alireza
6851 Dornbirn (AT)**

(74) Representative: **Rupp, Christian
Mitscherlich PartmbB
Karlstraße 7
80333 München (DE)**

(54) **RECTIFIER WITH INHERENT UNITY POWER FACTOR**

(57)    A rectifier stage (10), or namely a Dornbirn Rectifier, comprising a full wave rectifier (12) being supplied with an AC voltage (11), and supplying a half-bridge (14), a coupled inductor (15a), and two capacitors (13a, 13b) arranged in parallel on the supply side of the half-bridge (14), is provided. Said coupled inductor (15a) is connected between a midpoint of two switches (14a, 14b) of the half-bridge (14) and a midpoint between the two capacitors (13a, 13b), and is magnetically coupled with an inductor (15b) in a supply path of the AC voltage (11) to the rectifier (12). Said rectifier stage (10) further comprises two output terminals (16a, 16b) for supplying a rectified AC voltage, one output terminal being connected to the high potential side of the high potential switch and the other output terminal being connected to the low potential side of the low potential switch of the half-bridge.

Fig. 1

**Description**

TECHNICAL FIELD

The invention relates to power factor correction (PFC) technologies, specifically focusing on PFC converters used in power electronics to improve the power factor of electrical systems. The invention addresses the technical challenges associated with achieving high power factor and low total harmonic distortion (THD) in PFC converters, including issues related to hard switching, zero-crossing (crossover) distortion, the need for using a current sensor, and the need for using complex and fast-updating controllers for achieving high power factor and low THD.

BACKGROUND

Power factor correction (PFC) is essential in modern power converters, commonly implemented using boost and flyback topologies. Boost converters in Discontinuous Current Mode (DCM) face challenges with high peak currents and output voltages, while Continuous Current Mode (CCM) requires complex control systems, often not achieving unity power factor. Flyback converters suffer from low power factor and high total harmonic distortion (THD) due to duty cycle dependency. Issues like zero-crossing-induced THD and the complexities introduced by soft switching techniques are prevalent.

SUMMARY

In view of the above-discussed limitations, the objective of this invention is to provide an improved PFC converter design that overcomes these limitations, achieving a high power factor (PF) and low THD without significantly increasing the system's complexity or cost.

These and other objectives are achieved by the solution of this disclosure as described in the independent claims. Advantageous implementations are further defined in the dependent claims.

According to a first aspect of the invention, a rectifier stage is provided. The rectifier stage comprises: a full wave rectifier being supplied with an AC voltage, configured to provide a rectified voltage to a half-bridge. The rectifier stage also comprises two capacitors arranged in series across the input of the half-bridge, and a coupled inductor connected between a midpoint of two switches of the half-bridge and a midpoint between the two capacitors. Said coupled inductor is further magnetically coupled with an inductor placed in a supply path of the AC voltage to the rectifier. Said rectifier stage further comprises two output terminals for supplying a rectified voltage, one output terminal being connected to the high potential side of the high potential switch and the other output terminal being connected to the low potential side of the low potential switch of the half-bridge. Moreover, the midpoint of the switches has almost a half switching cycle of high voltage, i.e. the rectified voltage, and half cycle a zero voltage. Or it is switched between a positive and negative half of the rectified voltage, if the terminals are the midpoints between switches and the capacitors. It makes it possible to feed a switching transformer so that isolation is provided for a second power conversion stage.

In this configuration, the coupled inductor is used as the current shaper. One winding is on the AC side, while the other winding is derived with an alternating equal voltage. Advantageously, in this configuration, the two inductors especially charge and discharge, with the coupled inductor. This charging and discharging process especially generates current pulses from the input, with peaks proportional to the input voltage. As a result, the input current especially tracks the input voltage, effectively acting as inherent unity PFC.

According to an implementation form of the first aspect of the invention, the rectifier stage comprises one or multiple inductors in series in each of the two supply paths of the AC voltage, or one or multiple series inductors with the coupled inductor.

According to an implementation form of the first aspect of the invention, an average input current of the rectifier stage is a linear function of the AC voltage.

Advantageously, the input current completely follows the input voltage, and the input impedance of the rectifier stage is constant and purely resistive.

According to an implementation form of the first aspect of the invention, the rectifier stage comprises one or multiple passive and active Electromagnetic Interface, EMI, filters comprising at least a set of capacitors and inductors, or other electronic devices to filter out the switching harmonics.

According to an implementation form of the first aspect of the invention, the rectifier stage is configured to operate in a new type of current mode named Inherent Reverse Current Mode (IRCM), a DCM, a CCM, or a combination of each of them.

Notably, in the IRCM, the converter have forward and reverse current injections. The existence of the reverse current improves the power factor and decreases the THD by forcing the input current to follow the voltage of the AC source.

According to an implementation form of the first aspect of the invention, the full wave rectifier comprises four diodes arranged in a bridge configuration, wherein the diodes are configured to remain conducting near zero crossing, thereby preventing deviations from the sinusoidal waveform during zero crossings.

Advantageously, the proposed rectifier stage always has conducting diodes in zero-crossings, meaning that diodes are not turned off when the input voltage is near zero.

According to an implementation form of the first aspect of the invention, the two switches of the half-bridge are configured to operate alternately, with equal on-time.

Advantageously, the two switches of the half-bridge in the converter have zero voltage turning on during the entire mains cycle, thus minimizing switching losses.

According to an implementation form of the first aspect of the invention, to ensure that the converter functions as a PFC circuit, the converter can be designed so that the total voltage across the two capacitors (or another capacitor in parallel with the two of them as the bulk capacitor) is maintained at a level just slightly above the peak voltage of the AC input.

According to an implementation form of the first aspect of the invention, an average input power of the rectifier stage is controllable by adjusting a switching frequency of the two switches of the half-bridge

Advantageously, in this configuration, the average input power of the proposed rectifier stage can be controlled by the switching frequency. The voltage of the bulk capacitor can be sensed, and by adjusting the switching frequency the input and output power can be balanced to control the bulk voltage. Given its inherent power factor correction mechanism, feedback from the input current is unnecessary.

According to an implementation form of the first aspect of the invention, the rectifier stage has a THD below 2%, and/or has a power factor of at least 0.99, preferably approximately 1.

In one exemplary prototype, the measured power factor is almost 1 and THD is below 2%.

According to a second aspect of the invention, a system is provided. Said system comprises a rectifier stage according to the first aspect of the invention or any of its implementation forms, respectively, and an LED-based load supplied directly or by means of a further converter stage of the system, by said rectifier stage. Advantageously, this allows for cost-effectively achieving a low THD and an almost unity power factor.

DETAILED DESCRIPTION OF EMBODIMENTS

Exemplary embodiments of the invention are now further explained with respect to the drawings by way of example only, and not for limitation. In the drawings:

Fig. 1     shows an exemplary embodiment of an inventive rectifier stage.

Fig. 2     shows exemplary switching waveforms of the proposed rectifier stage.

Fig. 3     (a) shows the rectified voltage (DC output voltage),(b) shows the input current and voltage of the proposed rectifier stage.

Fig. 4     shows exemplary switching waveforms in an experiment: (a) S2 and S1 $V_{GS}$, (b) S2 $V_{DS}$, (c) $i_1$ (input current), (d) $i_2$ (the current through $L_2$).

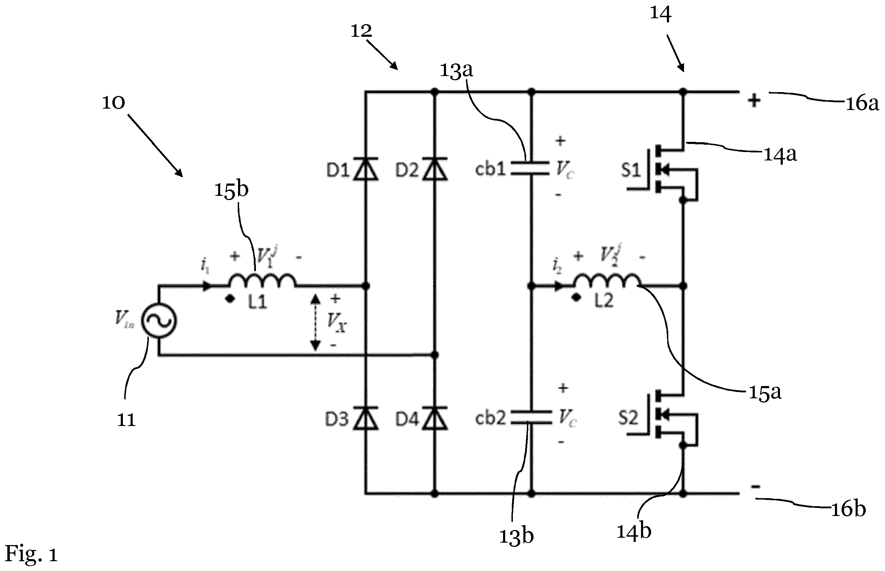

With respect to Fig. 1, a circuit diagram of an exemplary embodiment of a rectifier stage 10 is illustrated.

In accordance with Fig. 1, the rectifier stage 10 comprises a full wave rectifier 12 being supplied with an AC voltage 11, and supplying a half-bridge 14, a coupled inductor 15a, and two capacitors 13a, 13b arranged in parallel on the supply side of the half-bridge 14.

Said coupled inductor 15a is connected between a midpoint of two switches 14a, 14b of the half-bridge 14 and a midpoint between the two capacitors 13a, 13b. In addition, said coupled inductor 15a is magnetically coupled with an inductor 15b in a supply path of the AC voltage 11 to the full wave rectifier 12.

As can further be seen from Fig. 1, the rectifier stage 10 has no inductor in another supply path of the AC voltage 11 to the full wave rectifier 12.

Said rectifier stage 10 further comprises two output terminals 16a, and 16b for supplying a rectified AC voltage. One output terminal 16a is connected to the high potential side of the high potential switch 14a and the other output terminal 16b is connected to the low potential side of the low potential switch 14b of the half-bridge 14.

It may be understood that the proposed rectifier stage 10 is not in the context of an LLC, where the supply voltage for the following stages is tapped off the midpoint between the two switches of the half-bridge arrangement. However, it does not limit of the use of this converter in other resonant converters or simply a switching transformer for making isolation for a possible next converter stage.

The proposed topology is capable of achieving a unity power factor. Therefore, in this application, the rectifier stage 10 may also be referred to as the Unity Power Factor Rectifier (UPFR).

In accordance with Fig. 1, the half-bridge circuit 14 consists of two switches, S1 and S2. Two capacitors 13a, and 13b arranged in parallel on the supply side of the half-bridge 14, Cb1 and Cb2, may be bulk capacitors. Because of symmetry, it is plausible to assume $V_{Cb1} = V_{Cb2} = V_C$. The two capacitors may especially be understood as split or share, respectively, bulk capacitors. It is also possible to add another parallel bulk capacitor.

Especially in order to achieve a low THD and a high power factor, the coupled inductors 15a and 15b are exemplarily used. For instance, the coupled inductor L has one winding on the AC side with a self-inductance value of L1. The other winding, the coupled inductor 15a, is between the midpoint of the half-bridge switches and the midpoint of the two capacitors 13a, and 13b. The value of the voltage $V_X$ in Fig.1 is determined by the bridge diodes.

With respect to the coupled inductor 15a, it is further noted that said coupled inductor 15a exemplarily shares the same core with the above-mentioned inductor 15b. Said inductor 15b is connected in one of the AC side supply paths before the full wave rectifier 12 of the rectifier stage. Advantageously, especially via the charging and discharging with the coupled inductors, the PFC functionality of the proposed rectifier stage 10 can be achieved.

In accordance with Fig. 1, the full wave rectifier 12 exemplarily comprises four diodes D1, D2, D3, and D4 arranged in a bridge configuration, wherein the diodes are configured to remain conducting near zero crossing.

The following sections provide a detailed analysis of the proposed system.

Neglecting the voltage drop across the bridge diodes, when D1 and D4 are conducting, $V_X = 2V_C$. In this case, the input current is positive. When D2 and D3 are conducting then $V_X = -2V_C$, meaning that the input current is negative. S1 and S2 is always switched with half duty cycle.

It should be understood that the two switches 14a, and 14b of the half-bridge 14 are configured to operate alternately, such that each switch is turned on complimentary and with equal on-time.

With respect to switches 14a, and 14b of the half-bridge 14, it is noted that each of said switches 14a, and 14b exemplarily comprises or is an n-channel enhancement-type field-effect transistor.

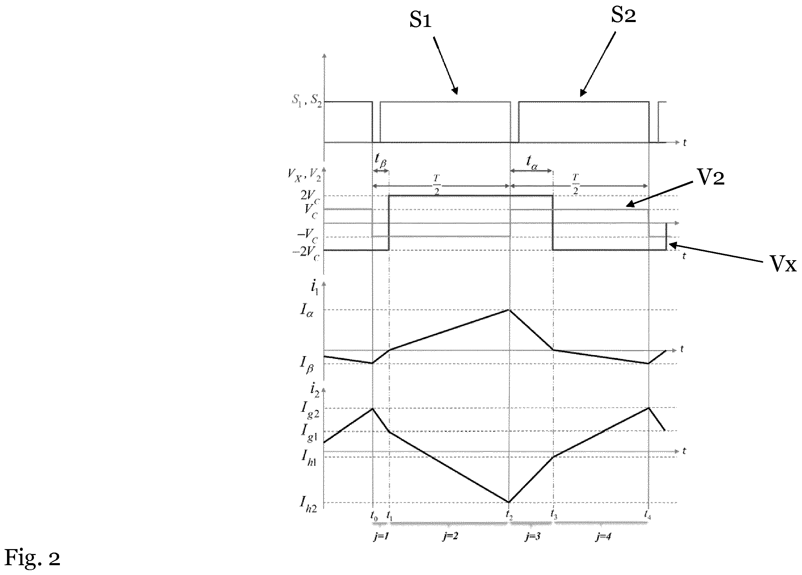

Fig. 2 shows exemplary waveforms of the proposed rectifier stage 10.

Depending on the state of S1 and S2, and the conduction of diode pairs, four time intervals exist in which each winding of L (L1 and L2) experiences different voltages and current slopes. The current waveforms of the different intervals are shown in Fig. 2. $i_1$ and $i_2$ are the currents of $L1$ and L2, respectively. The flux linkages are:

$$d\lambda_1 = L_1\, di_1 + M\, di_2 = V_1^j\, dt^j \qquad (1)$$

$$d\lambda_2 = M\, di_1 + L_2\, di_2 = V_2^j\, dt^j \qquad (2)$$

which the lower indices 1 and 2 denote for L1 and L2, respectively, and the upper index j denotes jth time interval (j = 1, 2, 3, or 4). M is the mutual inductance between L1 and L2. It can be written as:

$$\begin{pmatrix} di^1 \\ di^2 \end{pmatrix} = \Gamma \begin{pmatrix} V_1^j \\ V_2^j \end{pmatrix} dt^j \qquad (3)$$

which $\Gamma = \begin{pmatrix} \Gamma_{11} & \Gamma_{12} \\ \Gamma_{21} & \Gamma_{22} \end{pmatrix} = \dfrac{1}{L_1 L_2 - M^2} \begin{pmatrix} L_2 & -M \\ -M & L_1 \end{pmatrix}$. Moreover, from the input loop, $V_1^j = V_{in} - V_X$.

The positive half-cycle of the voltage source is considered for the analysis. The first interval starts at t0, at which S1 turns on, and S2 turns off. The input current i1 is negative, so the pair of D2 and D3 are conducting, and the pair of D1 and D4 are reversed, resulting in $V_X = -2V_C$, and therefore, $V_1^1 = V_{in} + 2V_C$. In this interval, the voltage across L2 is $V_{Cb1}$, so $V_2^1 = -V_C$. Besides, $di_1 = 0 - I_\beta$, $di_2 = I_{g1} - I_{g2}$, and $dt^1 = t_\beta$. Which $I_\beta$ is the peak negative of $i_1$ at $t_0$, $I_{g2}$ is the peak positive current of L2, $i_2$, at $t_0$, and $I_{g1}$ is the value of $i_2$ at $t_l$. By substituting into equation **(3)** :

$$\begin{pmatrix} -I_\beta \\ I_{g1} - I_{g2} \end{pmatrix} = \Gamma \begin{pmatrix} V_{in} + 2V_C \\ -V_C \end{pmatrix} I_\beta \qquad (4)$$

Equation (3) is rewritten with values illustrated in Fig. 2, for the other three intervals:

$$\begin{pmatrix} I_\alpha \\ I_{h2}-I_{g1} \end{pmatrix} = \Gamma \begin{pmatrix} V_{in}-2V_c \\ -V_c \end{pmatrix} \left(\frac{T}{2}-t_\beta\right) \tag{5}$$

$$\begin{pmatrix} -I_\alpha \\ I_{h1}-I_{h2} \end{pmatrix} = \Gamma \begin{pmatrix} V_{in}-2V_c \\ V_c \end{pmatrix} t_\alpha \tag{6}$$

$$\begin{pmatrix} I_\beta \\ I_{g2}-I_{h1} \end{pmatrix} = \Gamma \begin{pmatrix} V_{in}+2V_c \\ V_C \end{pmatrix} \left(\frac{T}{2}-t_\alpha\right) \tag{7}$$

Where T is the switching period, $I_{h2}$ is the peak negative of $i_2$ at $t_2$, the end of the second interval at which S1 turns off and S2 turns on. $I_{h1}$ is the value of $i_2$ at $t_3$. During the fourth interval, which starts at $t_3$, the diodes commute, and $V_X$ becomes $-2V_C$ again. The first element of equations (4) to (7) forms a system of equations with the four unknowns of $t_\alpha$, $t_\beta$, $I_\alpha$, $I_\beta$. The equations are solved as follows:

$$t_\alpha = T\omega(1-\gamma)/2(1-\gamma\omega) \tag{8}$$

$$t_\beta = T\gamma(1-\omega)/2(1-\gamma\omega) \tag{9}$$

$$I_\alpha = T\omega(-\Gamma_{11}(V_{in}-2V_C)-\Gamma_{12}V_C)(1-\gamma)/2(1-\gamma\omega) \tag{10}$$

$$I_\beta = T\gamma(-\Gamma_{11}(V_{in}+2V_C)+\Gamma_{12}V_C)(1-\omega)/2(1-\gamma\omega) \tag{11}$$

where, $\omega = \frac{\Gamma_{11}(V_{in}-2V_C)-\Gamma_{12}V_C}{-\Gamma_{11}(V_{in}-2V_C)-\Gamma_{12}V_C}$, and $\gamma = \frac{\Gamma_{11}(V_{in}+2V_C)+\Gamma_{12}V_C}{-\Gamma_{11}(V_{in}+2V_C)+\Gamma_{12}V_C}$. The average input current is:

$$I_{arg} = I_{\alpha\_arg} + I_{\beta\_arg} = \frac{I_\alpha}{2T}\left(\frac{T}{2}-t_\beta+t_\alpha\right) + \frac{I_\beta}{2T}\left(\frac{T}{2}-t_\alpha+t_\beta\right) \tag{12}$$

Substituting (8)-(11) in (12), considering $V_{in} = V_{in}\sin(2\pi f_L t)$ and simplifying, $I_{avg}$ can be written as:

$$I_{arg} = -\frac{\Gamma_{12}T}{8}V_{in} = \frac{M}{L_1L_2-M^2}\frac{T}{8}V_{in} = \frac{kT}{8(1-k^2)nL_2}V_{in} = R_{in}^{-1}V_{in} = R_{in}^{-1}V_m\sin(2\pi f_L t) \tag{13}$$

where $k = M/\sqrt{L_1L_2}$ is the coupling factor and $n = \sqrt{L_1/L_2}$. The input current completely follows the input voltage, and the input impedance of the converter is constant and purely resistive. The unity power factor operation is dependent on operating in IRCM, i.e. the existence of the revers current, $I_\beta$. A zero or positive $I_\beta$, associate with a zero or negative $t_\beta$, respectively, results in DCM. Hence, only $I_{\alpha\_arg}$, the DCM part of $I_{arg}$, exists. Equation (14) shows the average input power:

$$P_{in\_arg} = \frac{V_m^2}{2R_{in}} = \frac{kV_m^2}{16f_s(1-k^2)nL_2}, \tag{14}$$

in which $f_s = 1/T$ is the switching frequency. Notably, the average input power of the proposed UPFR can be regulated by adjusting the switching frequency.

The proposed rectifier always has conducting diodes in zero-crossings, meaning that diodes are not off when the input voltage is near zero. This feature prevents deviations from sinusoidal waveform in zero-crossings. It results from an occurrence in its switching cycle, which is named IRCM. This mode can be considered as a new current mode along with DCM and CCM. Moreover, the proposed UPFR takes advantage of an inherent Zero Voltage Switching (ZVS) and the voltage of the bulk capacitor can be just above the mains voltage at all times.

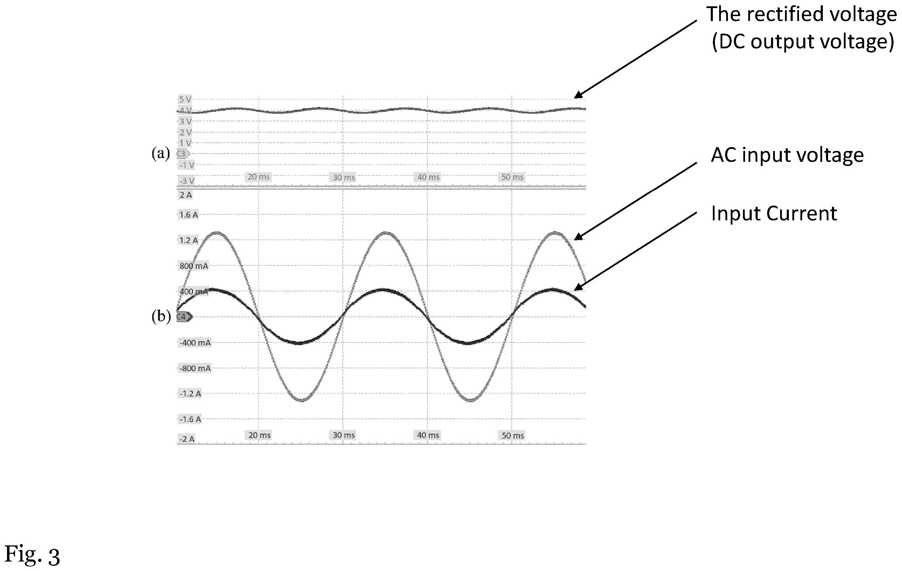

To verify the validity of the proposed topology, a 65W prototype has been built and tested. Fig. 3 depicts its voltage and the filtered input current. The measured PF is above 0.99 and THD is below 3%.

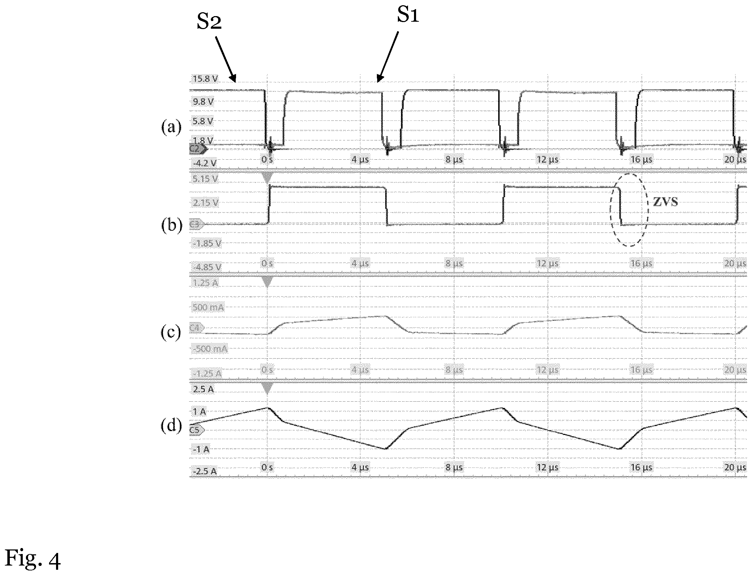

The switching waveforms as well as the coupled inductor waveforms are shown in Fig. 4. In particular, waveform (a) shows the Gate-Source Voltage $V_{GS}$ of switch S1 and S2, waveform (b) shows the Drain-Source Voltage $V_{DS}$ of switch S2, waveform (c) show the input current $i_1$ flowing through inductor L1, and waveform (d) shows the current flowing through inductor L2. As shown in Fig. 4, ZVS is achieved, enhancing the overall efficiency of the system.

In summary, this application proposes a rectifier topology featuring inherent PFC and soft switching capabilities. The mathematical analysis indicates that the rectifier's input impedance remains constant and purely resistive if the converter operates in IRCM over the entire mains cycle. Otherwise, there are some distortions to sinusoidal waveform, yet the power factor is very high and THD is low enough to be considered as a PFC converter. A 65W prototype has been developed and tested. The experimental results demonstrated that at an output power of 65 watts for the rectifier stage 10, the system achieved nearly unity PF, a very low THD in the input line current, ZVS on the power switches. In Addition, it must be noted that this PFC mechanism is inherently done, and no controller is needed to shape the input current to follow a sinusoidal waveform. The example mentioned here, and its current waveform (Fig.3) is achieved in open loop.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. A rectifier stage (10), comprising:

   a full wave rectifier (12) being supplied with an AC voltage (11), configured to provide a rectified voltage to a half-bridge (14), which includes two switches (14a, 14b),
   two capacitors (13a, 13b) arranged in series across the input of the half-bridge (14),
   a coupled inductor (15a) connected between a midpoint of the two switches (14a, 14b) and a midpoint between the two capacitors (13a, 13b),
   said coupled inductor (15a) being magnetically coupled with an inductor (15b) placed in a supply path of the AC voltage (11) to the rectifier (12), and
   said rectifier stage (10) further comprises:
   two output terminals (16a, 16b) for supplying a rectified voltage, one output terminal (16a) being connected to the high potential side of the high potential switch (14a) and the other output terminal (16b) being connected to the low potential side of the low potential switch (14b).

2. The rectifier stage (10) according to claim 1, comprising:
   one or multiple inductors in series in each of the two supply paths of the AC voltage (11), or one or multiple series inductors with the coupled inductor (15a).

3. The rectifier stage (10) according to claim 1 or 2, comprising:

   one or multiple passive and active Electromagnetic Interface, EMI, filters comprising at least a set of capacitors and inductors, or
   other electronic devices to filter out the switching harmonics.

4. The rectifier stage (10) according to any of the preceding claims, being configured to operate in an Inherent Reverse Current Mode, a Discontinuous Conduction Mode, or a Continuous Conduction Mode, or a combination of each of them.

5. The rectifier stage (10) according to any of the preceding claims, wherein the full wave rectifier (12) comprises four diodes arranged in a bridge configuration.

6. The rectifier stage (10) according to any of the preceding claims, wherein the two switches (14a, 14b) of the half-bridge (14) are configured to operate alternately.

7. The rectifier stage (10) according to any of the preceding claims, wherein the two switches (14a, 14b) of the half-bridge (14) are configured to switch at approximately zero voltage across the switches (14a, 14b).

8. The rectifier stage (10) according to any of the preceding claims, wherein the capacitors (13a) and (13b) are small-value capacitors, wherein the rectifier stage (10) further comprises a separate high-value capacitor connected in parallel to the output terminals (16a) and (16b), wherein the capacitors (13a, 13b) and the separate capacitor act as a bulk capacitor.

9. The rectifier stage (10) according to any of the preceding claims, wherein the midpoint of the two switches (14a, 14b) alternates between a high voltage corresponding to the rectified voltage and zero voltage during each switching cycle, or alternates between positive and negative halves of the rectified voltage.

10. The rectifier stage (10) according to claim 9, wherein the midpoint voltage of the two switches (14a, 14b) is used to feed a switching transformer to provide isolation for another power conversion stage.

11. A system comprising:

a rectifier stage (10) according to any of the claims 1 to 10, and
an LED-based load supplied directly or by means of a further converter stage of the system, by said rectifier stage (10).

Fig. 1

Fig. 2

Fig. 3

Fig. 4

Europäisches
Patentamt

European
Patent Office

Office européen
des brevets

# EUROPEAN SEARCH REPORT

**Application Number**

EP 24 20 3068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/014245 A1 (COSTINETT DANIEL JES [US] ET AL) 9 January 2020 (2020-01-09) * paragraphs [0008], [0030], [0031], [0033], [0036], [0060], [0066], [0069]; figures 4,8,18,19 * ----- | 1-11 | INV. H02M7/217 H02M7/219 H02M1/42 H02M1/00 H02M1/44 |
| Y | TW I 848 563 B (DELTA ELECTRONICS INC [TW]) 11 July 2024 (2024-07-11) * abstract; figure 5 * ----- | 1-11 | |
| Y | WANG HOUQING ET AL: "Topology Review of Transformerless Single-Phase Common-Ground Converters: Rectifiers", IEEE TRANSACTIONS ON POWER ELECTRONICS, INSTITUTE OF ELECTRICAL AND ELECTRONICS ENGINEERS, USA, vol. 39, no. 12, 12 August 2024 (2024-08-12), pages 16731-16774, XP011985446, ISSN: 0885-8993, DOI: 10.1109/TPEL.2024.3442854 [retrieved on 2024-08-13] * abstract; figure 16 * ----- | 1-11 | |
| A | US 2022/052620 A1 (DU CHUNSHUI [CN]) 17 February 2022 (2022-02-17) * paragraphs [0064], [0065]; figure 3a * ----- | 1-11 | |

**TECHNICAL FIELDS SEARCHED (IPC)**

H02M

The present search report has been drawn up for all claims

| Place of search | Date of completion of the search | Examiner |
|---|---|---|
| The Hague | 5 February 2025 | Kanelis, Konstantin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3068

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | Publication date | Patent family member(s) | | Publication date |
|---|---|---|---|---|
| US 2020014245 A1 | 09-01-2020 | US | 2020014245 A1 | 09-01-2020 |
| | | WO | 2018169520 A1 | 20-09-2018 |
| TW I848563 B | 11-07-2024 | NONE | | |
| US 2022052620 A1 | 17-02-2022 | CN | 110365231 A | 22-10-2019 |
| | | US | 2022052620 A1 | 17-02-2022 |
| | | WO | 2021022915 A1 | 11-02-2021 |

EPO FORM P0459

For more details about this annex : see Official Journal of the European Patent Office, No. 12/82